# EUROPEAN PATENT SPECIFICATION

(11) **EP 1 111 861 B1**
(45) Date of publication and mention of the grant of the patent: **11.07.2007**
(21) Application number: 00403663.8
(22) Date of filing: 22.12.2000
(51) Int. Cl.: H04L 12/56, H04L 12/28

(54) **Methods and devices providing wireless access to computer networks**
Verfahren und Geräte für drahtlosen Zugang zu Rechnernetzwerken
Procédés et appareils pour l'accès sans fil aux réseaux d'ordinateurs

(30) Priority: 24.12.1999 FR 9916460; 24.12.1999 FR 9916461
(43) Date of publication of application: 27.06.2001
(73) Proprietor: CANON EUROPA N.V., NL-1185 XB Amstelveen (NL)
(72) Inventor: Morvan, Isabelle, 35700 Rennes (FR); Tocze, Lionel, 35190 Saint Domineuc (FR); Visa, Pierre, 35000 Rennes (FR); Lorgeoux, Mickael, 35700 Rennes (FR)
(74) Representative: Santarelli

(56) References cited:
- EP-A- 0 597 640
- EP-A- 0 695 059
- EP-A- 0 785 658
- US-A- 5 396 493
- THE INSTITUTE OF ELECTRICAL AND ELECTRONIC ENGINEERS (IEEE) 1998, pages I-XIX, 1 - 355, XP002241251

## Description

The present invention relates to methods and devices for transmitting data packets in a telecommunications network, and to systems, information storage means and computer programs corresponding to them.

Especially, the invention is effectively adopted in the field of the interconnection of wireless networks with cabled networks.

More precisely, according to a first aspect, the invention is described in its application to the learning of the MAC ("*Medium Access Control*") address for a wireless point of access and a wireless terminal adaptor.

The European standard EN 301 649, 1999, DECT ("Digital Enhanced Cordless Telecommunications") describes the use of DECT radio technology for interconnection with equipment or networks of the Ethernet type (IEEE 802.3).

Document ANSI/IEEE Std 802.1 D, 1998 Edition, "Part 3: Media Access Control (MAC) Bridges", also designated as ISO/IEC 15802-3:1998, describes a general method for the operation of MAC Bridges, for the purpose of compatible interconnection of data processing equipment using the IEEE 802 MAC Service supported by interconnected IEEE 802 Local Area Networks using different or identical Media Access Control methods.

Through the document US-A-5 339 316 a local wireless network system is known which comprises:
- a local cabled network, and
- at least one local wireless network cooperating with the cabled network through an access point which has a gateway function.

When a source station, situated in the wireless network, transmits a data packet to the cabled network, the access point saves the source address of the packet. This saving of the source address is done for each packet received from a wireless terminal through the access point.

It may be useful to ensure the learning of the source address on each packet in this case where there is great mobility in the wireless network:
- new terminals joining the wireless network,
- terminals moving from one cell in the wireless network to another,
- etc.

However, in a system where the equipment items in the wireless network are not very mobile, as is the case for example with digital copiers, the frequency at which the equipment items are likely to be changed is very small. Therefore, in this situation, reading the source address on each packet constitutes a drawback.

There are also known, through the document US-A-5 812 531, a method and apparatus for interconnecting a wireless network with a cabled network. In order to be able to obtain the address of all the wireless nodes, the method uses a topology determination message which is regularly broadcast in the wireless network to all the terminals.

This method has the drawback of consuming a substantially large radio bandwidth and is in particular adapted to an environment where the wireless equipment items are very mobile.

According to a second aspect, the invention concerns the filtering of data packets from a first telecommunications network to a second telecommunications network. As seen above, the apparatus effecting the bridge between the two networks and fulfilling the filtering function is referred to as the access point. The data packets include the network address of the transmitting device, referred to as the source address, and the network address of the receiving device, referred to as the destination address.

The invention applies to the situation where a single terminal, having an address compatible with the first network, is accessible from the first network by means of the second network. For example, a first terminal of a cabled network may be accessible through a second terminal of the cable network only by passing through a wireless telecommunications network, to which the first terminal is connected by means of a wireless terminal adaptor.

In the field of the interconnection of local networks, it is well known to use a bridge between two networks. The bridge generally functions by means of a specific memory, which contains the table of addresses of the first network.

For each packet coming from this network, the bridge generally compares the destination address with the addresses contained in the table. If the destination address corresponds to an address contained in the table, this means that the packet is intended for a terminal of the first network and the packet is not transmitted to the second network. In the contrary case, this means that the packet may be intended for a terminal in the second network; it is therefore transmitted to this second network.

It is known from document EP-A-0 695 059 to use an access point as an internetworking device that relays data packets based on address which are registered with the access point.

Improvements to this filtering system are known. For example, the document US-A-5 959 976 makes it possible to reduce the memory capacity of the table of addresses, keeping only a flag equal to 0 or 1 in place of the complete address. Moreover, the document US-A-5 396 493 proposes to relieve the main processor of the comparison of the addresses, allocating this task to the network controller, again by means of a table.

Nevertheless, in spite of these improvements, the use of such a table of addresses notably has the drawbacks of requiring the presence of an additional memory and the use of a complex controller provided with specific functions for filtering several addresses.

In addition, through the document EP-A-0 785 658 the allocation of an address for filtering is known. In this document, the access point is a bridge between a local network and a wireless network composed of terminal adaptors. The radio address of the terminal is allocated to the address of the adaptor to which it is connected. Thus the adaptor can filter, at a wireless link, the packets intended for the terminal. However, such a system has the drawback of representing a load for the wireless network.

The purpose of the present invention is to remedy the above drawbacks.

To remedy such drawbacks, this invention proposes a method of filtering data packets according to claim 1 and an access point according to claim 3. Other features are recited in the subclaims.

The invention has many advantages, notably:
- it affords a reduction in the processing time spent for the automatic learning of the address;
- it allows real-time updating of the information for filtering the data packets coming from the cabled network before transmission over the radio medium (this advantage is explained below);
- it constitutes a solution which can be achieved without any additional electronic component, by software means, whence a low cost;
- it is a solution independent of the filtering method chosen (by software or dedicated electronic component);
- it is a solution specially adapted to make it possible to provide positioning mobility to heavy and not very mobile equipment items, such as digital copiers, that is to say it confers great flexibility for changing the position of these equipment items if necessary.

Thus, the invention optimises the processing time for a packet received over the radio port of a wireless access point for learning the source address, in order to effect a filtering function.

In addition, the invention makes it possible, in a wireless network, to filter the data coming from a cabled network with a higher transmission rate and is adapted to a system where the access point on the cabled network is intended to communicate with wireless terminal adaptors, to which only one item of network termination equipment can be connected, for example a printer, a computer or a digital copier.

The present invention makes it possible to reduce the processing time for each packet, by reading the source address of an item of equipment connected to the wireless network, not for each packet, but only when this is necessary, that is to say when an item of equipment in the wireless network is likely to have been changed. This allows to improve the performance of the whole of the system.

This invention makes it possible to dispense with the use of electronic components or additional memories for the filtering function, and therefore to reduce the development and manufacturing costs. This is because, on the one hand, the invention uses no additional memory, since the address to be filtered is allocated to the address proper of the network controller of the access point and, on the other hand, the invention does not require the use of a complex controller provided with functions for the filtering of several addresses.

Moreover, according to the present invention, the access point with the address of the terminal is "transparent" seen from the first network. The invention makes it possible to completely effect the filtering at the access point, which reduces the load on the wireless network.

The terminal whose network address it is sought to filter is for example a printer or computer or digital copier connected to a local network by means of a specific link such as a radio or infrared connection.

The invention also has other advantages, notabiy:
- it affords a reduction in the processing time for each packet without the development of specific software;
- it is a solution which does not use the resources of the main processor, given that the network controller is responsible for the operation;
- it allows a reduction in the load on the network providing the link with the terminal and the access point;
- in the case where the terminal is connected to a terminal adaptor, the electronic cards are identical for the access point and the adaptor.

The invention also relates to a computer readable medium according to claim 4, microprocessor storing instructions of a computer program, making it possible and wich may be partially or totally removable.

The invention also relates to a computer program according to claim 6.

The particular characteristics not expressly mentioned above and the advantages of the computer readable medium and of the computer program being the same as those of the method according to the invention, they are not repeated here.

Other particular characteristics and advantages of the invention will emerge from a reading of the following detailed description of particular embodiments, given by way of in no way limitative examples. The description refers to the drawings which accompany it, in which:
- Figure 1 depicts schematically a local wireless telecommunications network, able to be connected to a local cabled telecommunications network by means of a wireless access point;
- Figure 2 depicts schematically the structure of an Ethernet MAC data frame;
- Figure 3 depicts schematically the structure of a wireless terminal adaptor in accordance with the first aspect of the invention, in a particular embodiment;
- Figure 4 depicts schematically the structure of a wireless access point according to the invention, in a particular embodiment;
- Figures 5A and 5B are flow diagrams illustrating the functioning of a wireless access point according to the invention, in a particular embodiment;
- Figures 6A, 6B, 7A and 7B are flow diagrams illustrating the functioning of a wireless terminal adaptor according to the invention, in a particular embodiment;
- Figure 8 depicts schematically the information flows exchanged by a communication terminal, the wireless terminal adaptor which is associated with it, a wireless access point and a cabled network, such as the ones illustrated in Figure 1, when the method of the invention is implemented, in a particular embodiment;
- Figure 9 depicts schematically the structure of a wireless access point and a wireless terminal adaptor according to the second aspect of the invention, in the form of an electronic circuit, in a particular embodiment;
- Figure 10 is a flow diagram illustrating the functioning of the electronic circuit of Figure 9 on powering up, in a particular embodiment;
- Figure 11 is a flow diagram illustrating the functioning of a wireless access point according to the second aspect of the invention, in a particular embodiment; and
- Figure 12 is a flow diagram illustrating the functioning of a wireless terminal adaptor according to the second aspect of the invention, in a particular embodiment.

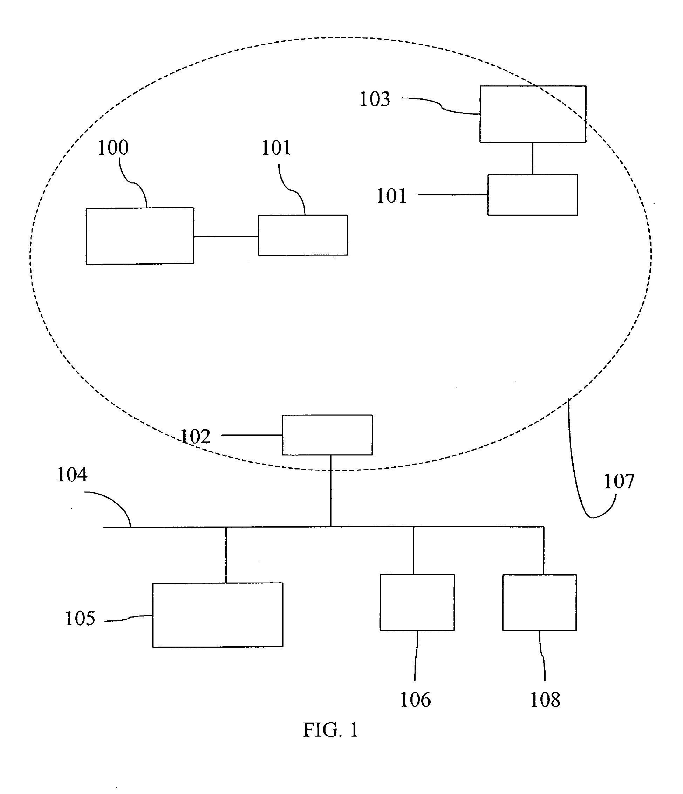

**Figure 1** depicts a wireless local network 107 which can be interconnected to a cabled local network 104 by means of a wireless access point 102.

The wireless local network 107 consists of several items of terminal equipment 100, 103 having a communication interface with the network.

In a preferred embodiment of the invention, the terminals 100 and 103 are digital copiers provided with an Ethernet interface. However, the context of a cabled network of the Ethernet type is given by way of in no way limitative example; the invention applies just as well to the interconnection with any other type of cabled network, for example a network of the token ring type.

Each terminal is connected to the wireless local network by means of a wireless terminal adaptor 101, possibly integrated into the terminal.

A terminal adaptor makes it possible to connect one and only one terminal.

According to a preferred embodiment of the invention, the wireless terminal adaptor is connected to the terminal by an interface of the 10 or 100 base T (Ethernet) type.

The number of adaptors of the wireless local network terminal is limited by the capacity of the wireless access point.

According to a preferred embodiment of the invention, the number of terminal adaptors 101 supported by the access point 102 is limited to one.

According to a preferred embodiment of the invention, the wireless communication between the access point 102 and the wireless terminal adaptors 101 uses the DECT digital radio communication technology specified by the ETSI, EN 300 175, 1991.

According to a preferred embodiment of the invention, the cabled local network 104 is a network of the Ethernet type having a transmission rate of 10 and/or 100 Mbit/s.

The items of equipment 105, 106 and 108 are terminals connected to the cabled network 104. For example, the terminal 105 is a print server and the terminals 106 and 108 are computers.

The DECT radio technology makes it possible to achieve a maximum transmission rate of 552 kbit/s whilst the transmission rate of the cabled network can attain 100 Mbit/s. The wireless access point 102 cannot therefore transfer over the radio medium all the data circulating on the cabled network without risk of unnecessarily loading the radio link or even losing data. It is necessary to filter the data packets coming from the cabled network before transmitting them over the wireless network. Only the packets intended for the wireless network terminals 100, 103 must be transferred over the radio medium.

The packets are filtered at level 2 of the OSI ("*Open Systems Interconnection*") model layer, that is to say at the level of the MAC ("*Medium Access Control*") layer of the Ethernet network.

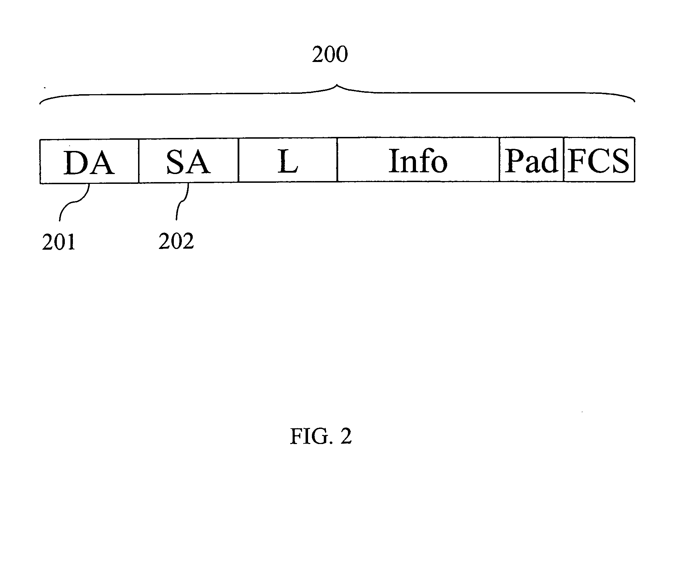

**Figure 2** depicts the structure of an Ethernet MAC data frame designated by the reference 200 in the drawing (defined by IEEE 802.3).

This frame is composed of several fields. For the present invention, the first two fields 201 and 202 are particularly useful. The field "DA" 201 contains the MAC destination address of the packet, in 6 bytes. The field "SA" 202 contains the MAC source address, or original address of the packet, in 6 bytes.

The field "L" contains the length of the data contained in the frame, in 2 bytes. The field "Info" contains the data proper, in a number of bytes which can vary from 0 to 1500. The field "Pad" contains binary padding elements, in 46 bytes at a maximum, so that the total number of bytes contained in the fields "DA", "SA", "L", "Pad" and "FCS" is equal to 64. The field "FCS" ("*Frame Check Sequence*") contains a check sequence allowing to detect transmission errors.

When the access point receives, from the cabled network 104, a data packet whose destination address 201 corresponds to the MAC address of one of the communication terminals 100 or 103 of the wireless network 107, this packet must then be transmitted over the radio medium. On the other hand, when the access point receives a packet whose destination address 201 does not correspond to the MAC address of one of the terminals 100 or 103, this packet must be not taken into account, except if the destination address 201 corresponds to a "broadcast" address. For this purpose, the access point effects a filtering of the data which reach it.

In order to be able to fulfil this filtering function, the access point must know the MAC addresses of the terminals connected to the wireless local network. The invention proposes an automatic learning method (that is to say without the intervention of an operator) for the MAC address, which makes it possible to form a filtering table at the wireless access point. The invention is independent of the chosen filtering method (whether the filtering function is carried out totally by software means implemented by a microprocessor, or the filtering function is performed by a specific adapted component of the CAM ("*Content Addressable Memory*") type.

On the other hand, given that the access point supports only one MAC address per wireless terminal adaptor (which is equivalent to a single MAC address per radio connection, since there is one radio connection with the access point per adaptor), which is the address to be taken into account during the learning (it will be seen later that the access point reads the source address on the first data packet received), the invention applies only when the wireless terminal adaptor does not have its own MAC address, failing which the access point would not "see" the MAC address of the communication terminals. This absence of MAC address peculiar to the wireless adaptor has several advantages: it simplifies the design, reduces the cost of implementation and affords a saving in processing time.

In accordance with the invention, at the time of the reception, over the radio link, of a packet coming from one of the terminals 100 or 103, the access point 102 recovers the source address which corresponds to the MAC address of the terminal. This address becomes the MAC address of the access point 102.

With regard to the wireless terminal adaptor 101, no filtering function is necessary. All the packets received over the radio are retransmitted over the 10/100 Base T interface, and all the packets received over the 10/100 Base T interface are retransmitted over the radio.

On the other hand, given that, for the access point 102, two items of network equipment (the terminal 100 or 103 and the access point 102) have the same MAC address, the access point 102 cannot be administered at a distance. The same applies for the wireless terminal adaptor 101, which is transparent vis-à-vis the cabled network 104.

In a variant, if the terminal 100 or 103 does not have its own address, it is the address of the wireless terminal adaptor 101 which becomes the original address of the packets coming from the terminal 100 or 103.

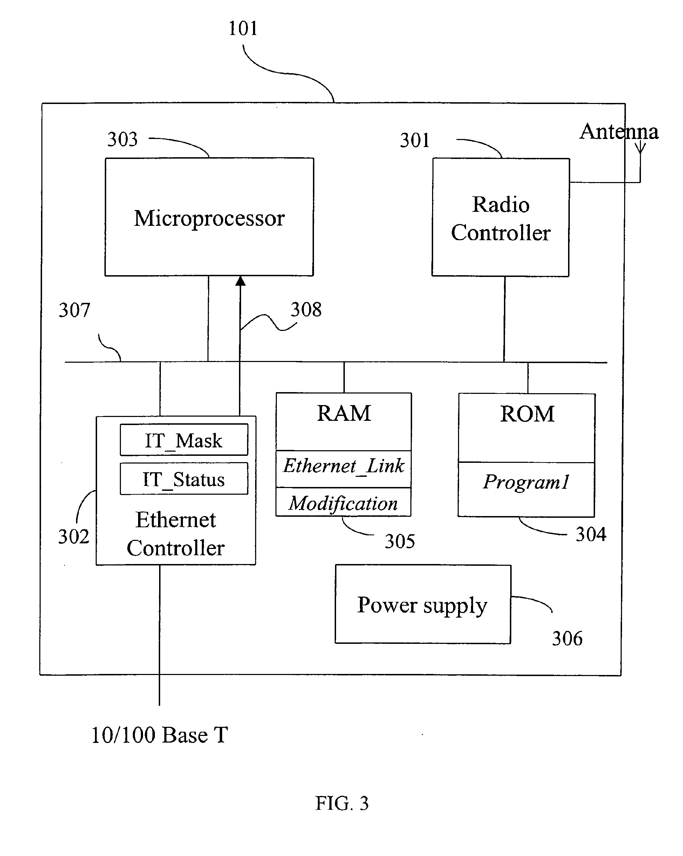

**Figure 3** depicts the electronic circuit of a wireless terminal adaptor 101 in accordance with the first aspect of the invention, using the DECT European standard, able to be connected to a 10 or 100 Mbit/s Ethernet terminal.

The wireless terminal adaptor operates in the DECT mode as a portable part (that is to say mobile station). This wireless terminal adaptor can be integrated into an item of equipment of the computer, printer, digital copier etc type, or connected to one of the items of equipment cited above.

According to a preferred embodiment of the invention, the wireless terminal adaptor is connected to a terminal having an Ethernet interface.

The electronic circuit 101 has, connected together by an address and data bus 307:
- a radio unit 301, provided with an antenna,
- a link controller 302,
- a microprocessor 303,
- a read only memory ROM 304, and
- a random access memory RAM 305.

In addition, an electrical power supply 306 is provided for supplying all the components of the electronic circuit 101 (the electrical links concerning the power supply are not shown).

"Link controller" means here any means making it possible to determine whether there is an active terminal on the network, namely a terminal which is not switched off. Such a means is known to a person skilled in the art and will therefore not be described in detail here.

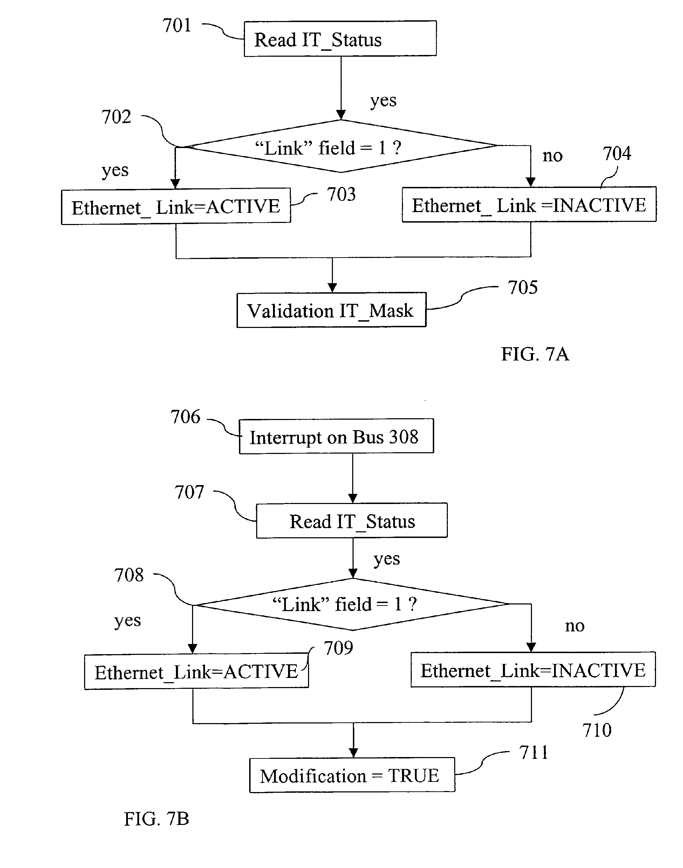

In the particular embodiment described here, the link controller 302 is a controller of the Ethernet type, which manages the Ethernet interface intended to communicate with a terminal of the wireless network 100, 103. In addition, through an interrupt bus 308, the Ethernet controller 302 makes it possible to indicate to the microprocessor 303 any change in state of the Ethernet connection, as explained below in relation to Figures 7A and 7B. The Ethernet controller 302 contains two registers "*IT_Status*" and "*IT_Mask*" defined below.

All the components illustrated in Figure 3 are well known to a person skilled in the art of communication circuits with processor and, more generally, information processing circuits. They are therefore not detailed here. The electronic circuit 101 and, in particular, the microprocessor 303 is adapted to exploit all the capabilities of the DECT standard known at the time of the present invention.

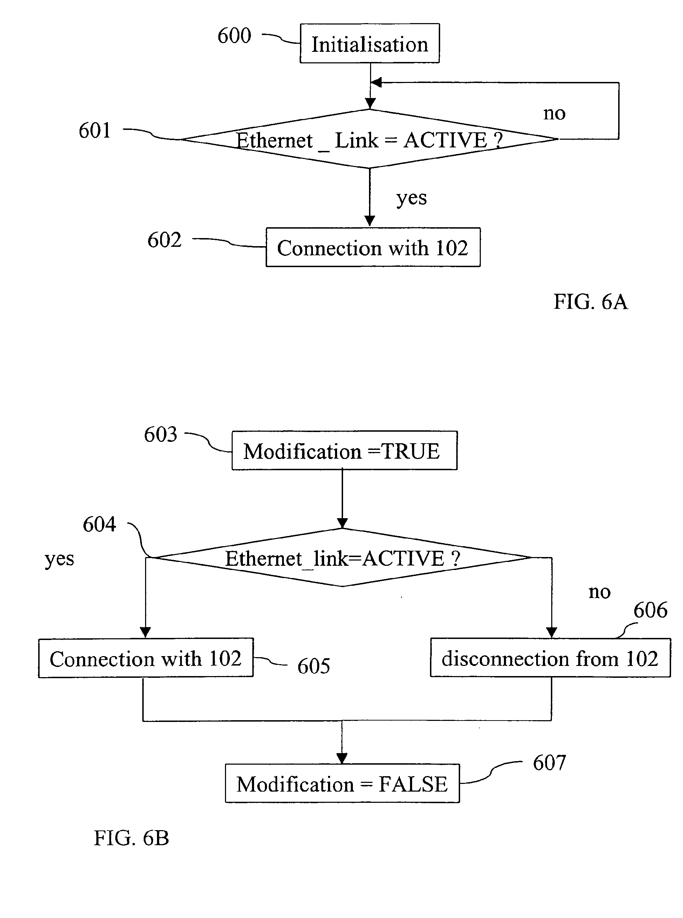

The microprocessor is also adapted to implement the method of the invention and in particular the flow diagram illustrated in Figures 6A, 6B, 7A and 7B.

The random access memory 305 contains registers which, for convenience, each bear the same name as the data which they contain, notably:
- a register "*Ethernet_Link*"*,* in which there is stored the state of the Ethernet link, which can take the value ACTIVE or INACTIVE, depending on whether or not there is an active communication terminal (that is to say one which is powered up) connected to the terminal adaptor 101, and
- a register *"Modification",* which indicates, when its state is TRUE, that a modification of the Ethernet link has been signalled by an interrupt on the interrupt bus 308.

The read only memory 304 contains registers which, for convenience, each bear the same name as the data which they contain, notably:
- a register *"Program 1*", in which there is stored the operating program of the microprocessor 303.

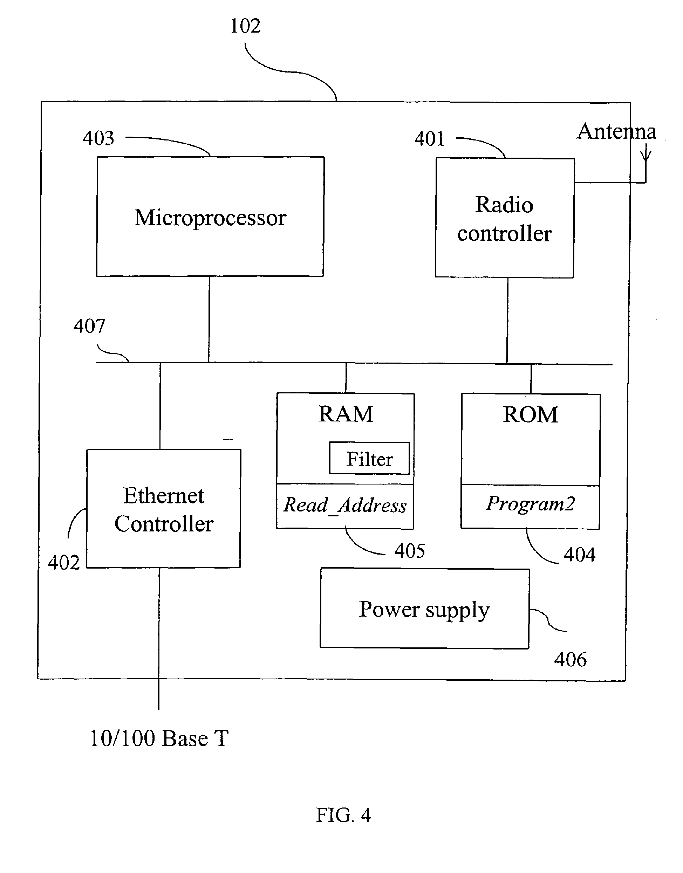

**Figure 4** depicts the electronic circuit of the wireless access point 102 according to the first aspect of the invention, using the DECT European standard, able to be connected to an Ethernet network having a transmission rate of 10 or 100 Mbit/s.

The wireless access point operates in the DECT mode as a fixed part (that is to say base station).

The electronic circuit 102 has, connected together by an address and data bus 407:
- a radio unit 401, provided with an antenna,
- a link controller 402,
- a microprocessor 403,
- a read only memory ROM 404, and
- a random access memory RAM 405.

In addition, an electrical power supply 406 is provided for supplying all the components of the electronic circuit 102 (the electrical links concerning the power supply are not shown).

The link controller 402 is, in the particular embodiment described here, a controller of the Ethernet type, which manages the Ethernet interface intended to communicate with the cabled network 104.

All the components illustrated in Figure 4 are well known to a person skilled in the art of communication circuits with processor, and, more generally, information processing circuits. They are therefore not detailed here. The electronic circuit 102 and in particular the microprocessor 403 is adapted to exploit all the capabilities of the DECT standard known at the time of the present invention.

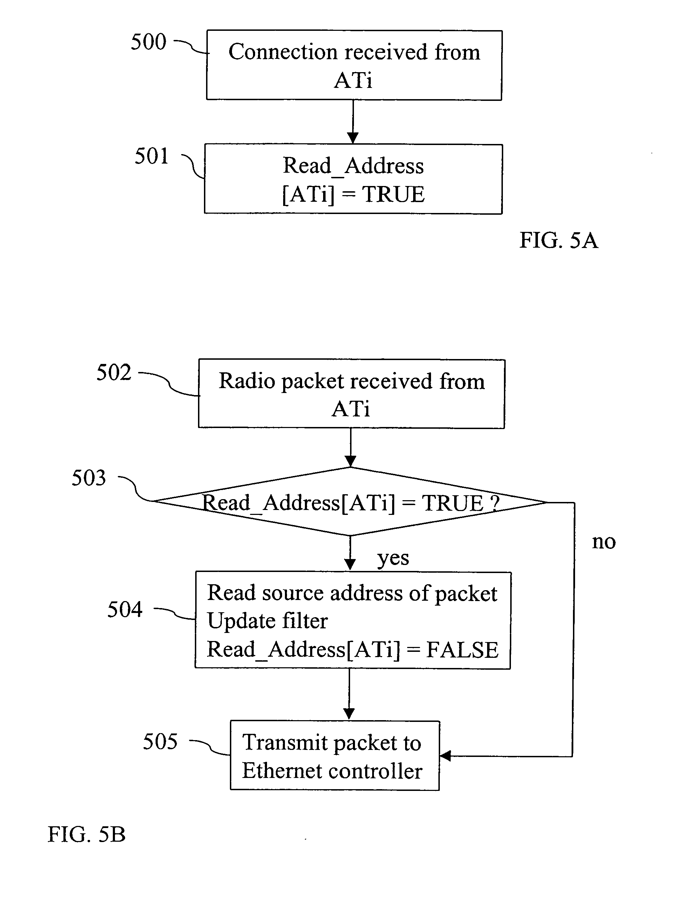

The microprocessor is also adapted to implement the method of the invention and in particular the flow diagram illustrated in Figures 5A and 5B.

The random access memory 405 contains registers which, for convenience, each bear the same name as the data which they contain, notably:
- a register *"Filter",* containing an array with as many elements as there are wireless terminal adaptors connected to the wireless network 107; this array establishes a match between MAC addresses and radio addresses (that is to say identifying a given radio connection); and
- a register *"Read_Address",* containing an array with as many Booleans as there are wireless terminal adaptors connected to the wireless network 107; the Booleans in this register have the value TRUE if the activation of the learning of the address is necessary for the corresponding wireless terminal adaptor, or the value FALSE otherwise.

The read only memory 404 contains registers which, for convenience, each bear the same name as the data which they contain, notably:
- a register *"Program2",* in which there is stored the operating program of the microprocessor 403.

The filter of the wireless access point 102, that is to say the register "*Filter*"*,* is initialised after powering up, so that the access point transmits over the radio medium only the frames intended for broadcast: these are the frames whose destination address 201 (see Figure 2) is equal to FF-FF-FF-FF-FF-FF in hexadecimal.

In order to be able to exchange data between the access point and one or more wireless terminal adaptors, a radio connection must have previously been established between the terminal adaptor and the access point. It is the wireless terminal adaptor which initialises the radio connection with the access point.

Thus, after initialisation of the filtering function of the wireless access point 102, no frame from the cabled network 104 is transmitted over the radio medium as long as no radio connection is established by a wireless terminal adaptor 101 with the wireless access point 102.

**Figure 5A** depicts the processings executed by the microprocessor 403 of the access point 102 in accordance with the first aspect of the invention when, during a step 500, a radio connection is received by the access point 102 from one of the wireless terminal adaptors 101, this adaptor being designated here as ATi.

The microprocessor 403 then performs an activation operation 501, which consists of setting to the value TRUE the element situated at the position corresponding to the adaptor ATi in the array "*Read_Address*" of the RAM 405. This element is denoted Read_Address[ATi] in Figure 5A. The effect of this operation is to activate the automatic address learning mode.

**Figure 5B** depicts the processings executed by the microprocessor 403 of the access point 102 in accordance with the first aspect of the invention when, during a step 502, a data packet is received on a radio connection from the adaptor ATi.

The microprocessor 403 then performs a test 503 on the value of the element in the array *"Read_Address"* situated at the position corresponding to the adaptor ATi.

If this element is equal to TRUE, then an operation of reading, updating and deactivation 504 described below is performed.

If this element is equal to FALSE, the microprocessor 403 then directly performs a transmission operation 505 described below.

If the element is equal to TRUE, the operation of reading, updating and deactivation 504 consists of reading the source address 202 (see Figure 2) of the packet received (that is to say the MAC address of the communication terminal which sent the packet), and then updating the filter of the wireless access point 102 with this new address. If no address was previously associated with the adaptor ATi in the filter, this address is then initialised with the source address value of the packet currently being processed. If any address was already associated with the adaptor ATi, this address remains unchanged in the case where the address read in the received packet is identical to it. In the contrary case, this address is then replaced by the new address read in the packet currently being processed.

Next the microprocessor 403 deactivates the automatic address learning function, by setting to FALSE, in the random access memory 405, the element in the array *"Read_Address"* corresponding to the adaptor ATi.

The processing phase corresponding to the automatic learning of the address of the terminal associated with the wireless adaptor ATi is then terminated.

The transmission operation 505, which consists of transmitting the packet to the Ethernet controller 402, is then executed. The Ethernet controller 402 is then responsible for transmitting this packet over the cabled network 104.

The processings which have just been described in relation to Figures 5A and 5B make it possible:
- to activate the terminal address learning mode each time a new radio connection is established between the access point and a terminal, by means of a wireless adaptor of the latter, and
- to deactivate the address learning mode as soon as the terminal address has been read from the source address of the first packet received over a given connection.

Thus the reading of the source address is effected only on the first packet received over a given radio connection, which reduces the processing time for the following packets.

**Figure 6A** depicts the processings carried out by the microprocessor 303 of the wireless terminal adaptor 101 according to the first aspect of the invention after powering up.

After an initialisation phase 600, described below in relation to Figure 7A, the microprocessor 303 checks the state of the activity of the Ethernet link during a test 601, by testing the value of the variable *"Ethernet_Link"* contained in the random access memory 305. If test 601 is positive ("*Ethernet_Link*" = ACTIVE), this means that there is indeed an active communication terminal (that is to say one which is powered up) connected to the terminal adaptor. A connection operation 602 is then performed, which consists of establishing a radio connection between the adaptor 101 and the access point 102. If the test 601 is negative, nothing happens as long as the Ethernet link does not become active.

**Figure 6B** depicts the processings carried out by the microprocessor 303 of the wireless terminal adaptor 101 according to the first aspect of the invention after the Ethernet controller 302 has signalled to the microprocessor 303 a change in state of the Ethernet link, this change in state being signalled by setting to the value TRUE the variable *"Modification"* contained in a register of the random access memory 305 (step 603).

The microprocessor then performs a test 604, in order to know the value of the variable *"Ethernet_Link".* The result of test 604 is positive when the Ethernet link has changed from the inactive state to the active state. If test 604 is positive, a connection operation 605, which consists in establishing a connection with the access point 102, is then performed. If the result of test 604 is negative, a disconnection operation 606, which consists in breaking the connection established with the access point 102, is performed.

After either one of the connection 605 or disconnection 606 operations, the microprocessor 303 performs an updating step 607, which consists of resetting the variable "*Modification*" to FALSE, indicating that the taking into account of the change of state has been effected and making it possible to await a new notification of the change in the Ethernet link.

The processings which have just been described in relation to Figures 6A and 6B make it possible:
- to detect in real time the presence or absence of an active terminal (one which is powered up) connected to a terminal adaptor 101, and
- to establish a radio connection with the access point only when there is an active terminal connected to the terminal adaptor 101.

The combination of the processings illustrated by Figures 5A, 5B, 6A and 6B makes it possible to activate the automatic learning of the address of a terminal each time a new radio connection is established, that is to say each time the equipment item connected to the wireless terminal adaptor is likely to have been changed:
- either after the powering up of the terminal adaptor,
- or after the disconnection and then reconnection of the Ethernet cable between the terminal 100 or 103 and the wireless terminal adaptor 101.

As described in relation to Figure 3, the Ethernet controller 302 of the wireless terminal adaptor 101 contains two registers:
- *"IT_Status"*: This register contains different information fields enabling to identify the state of the Ethernet controller. Notably, a field *"Link"* makes it possible to identify the state of the link: if this field contains a logic "1", this means that the link is active, otherwise, that the link is inactive. Other fields of the register *"IT_Status"* can make it possible to identify the reception of an Ethernet packet, the end of transmission of a packet and other information necessary to the control of the Ethernet controller by the microprocessor 303;
- *"IT_Mask":* This register contains different information fields making it possible to validate or not the interrupt on the interrupt bus 308 for different types of event. Notably, a field *"Link"* makes it possible to enable the generation of an interrupt during a change in state of the link. Other links can make it possible to enable the generation of an interrupt during the reception of an Ethernet packet or the end of transmission of a packet by the Ethernet controller. In general terms, if a field in the register "*IT_Mask*" contains a logic "1", this means that an interrupt is enabled.

**Figure 7A** depicts the processings performed by the microprocessor 303 of the wireless terminal adaptor 101 according to the first aspect of the invention during the initialisation phase 600 illustrated in Figure 6A.

The microprocessor checks the state of the activity of the Ethernet link by performing first of all a reading of the register *"IT_Status"* (reading operation 701). Then, during a test 702, the microprocessor 303 tests the value of the field *"Link'* in this register. If test 702 is positive (Field *"Link" =* 1), this means that there is indeed an active terminal connected to the terminal adaptor. An updating operation 703 is then performed, which consists of setting the variable "*Ethernet_Link*" to the value ACTIVE. If test 702 is negative, an updating operation 704 is then performed, which consists of setting the variable *"Ethernet_Link"* to the value INACTIVE.

After either one of the updating operations 703 or 704, the microprocessor 303 performs an interrupt enable operation 705 which consists of positioning, in the register *"IT_Mask",* the field *"Link"* at the value logic "1" so as to enable the interrupt on the interrupt bus 308, so that the latter indicates any change in state of the Ethernet link.

**Figure 7B** shows the processings carried out by the microprocessor 303 of the terminal adaptor 101 in accordance with the first aspect of the invention when an interrupt is received from the Ethernet controller 302.

During a step 706, such an interrupt is signalled by the interrupt bus 308. A reading operation 707 is then performed, which consists of reading the register "*IT_Status*"*.* Then, during a test 708, the microprocessor 303 tests the value of the field "*Link"* of this register. If the test 708 is positive (Field "*Link*" *=* 1), this means that there is indeed an active terminal connected to the terminal adaptor. An updating operation 709 is then performed, which consists of setting the variable "*Ethernet_Link*" to the value ACTIVE. If test 708 is negative, an updating operation 710 is then performed, which consists of setting the variable "*Ethernet_Link*" to the value INACTIVE.

After either one of the updating operations 709 or 710, the microprocessor performs an operation 711 of change in state of the link, which consists of positioning the variable *"Modification"* to TRUE, then making it possible to start off the processings described above with the help of the flow diagram of Figure 6B.

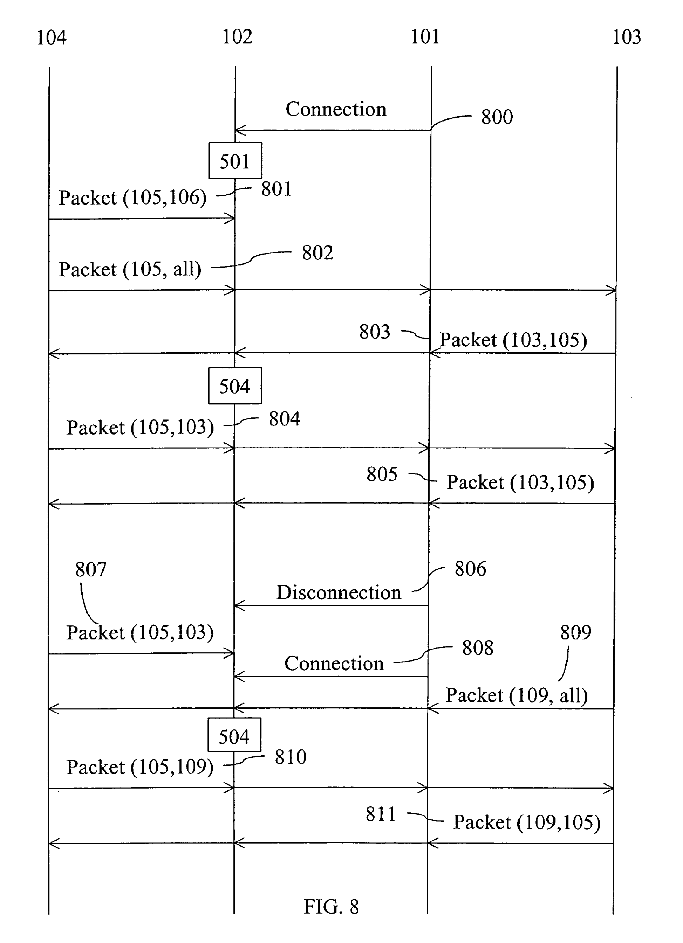

**Figure 8** depicts an example of the flow of packets exchanged between the cabled network 104 and the terminal 103 connected to the wireless network 107, in accordance with the first aspect of the invention. The same description would apply to an exchange of packets between the cabled network 104 and the terminal 100, illustrated in Figure 1, also connected to the wireless network 107.

After initialisation of the adaptor 101, the latter detects that the Ethernet link is active, and can therefore establish a connection 800 with the access point 102. After having received the connection from the adaptor 101, the access point 102 activates the automatic source address learning mode (activation operation 501 illustrated in Figure 5A).

After powering up, the filter of the access point is initialised in order to transmit only the packets of the general broadcast type. By way of non-limitative example, a packet 801, received from the cabled network, which is for example a packet from the terminal 105 intended for the terminal 106 also connected to the cabled network, is not transmitted to the wireless network 107. On the other hand, a packet 802, which is a packet of the general broadcast type (the general broadcast address being designated symbolically by the word "All" in Figure 8), is transmitted to the wireless adaptor 101, which then transmits it to the terminal 103.

For example, the packet 802 can be a packet of the ARP ("*Address Resolution Protocol*") request type, containing the network address of the terminal 103. The terminal 103 must then reply to this message by a packet 803 of the ARP response type to the source of the packet 802, that is to say to the terminal 105 connected to the cabled network. The packet 803 is transmitted by the adaptor 101 to the access point 102. As the automatic source address learning mode is activated, the access point 102 reads the source address of the packet 803 and initialises the filter with this address. Next it deactivates the automatic learning; thus the source address of the next packets received over this same connection will not be analysed (reading, updating and deactivation operation 504 illustrated in Figure 5B). The packet 803 is then transmitted by the access point 102 to the cabled network 104.

Next a packet 804, coming from the terminal 105 of the cabled network, intended for the terminal 103, can be transmitted over the radio medium, since the filter of the access point 102 has been programmed with the address of the terminal 103. The packet 805 is the response of the terminal 103 to the packet 804.

If after the sending of the packet 805 the user disconnects the Ethernet cable between the wireless adaptor 101 and the terminal 103, the adaptor 101 is then disconnected from the access point 102 (disconnection 806). If a packet 807, whose destination address if that of the terminal 103, is received by the access point 102 coming from the terminal 105 of the cable network, this packet is not transmitted, since the connection with the terminal 103 is no longer active.

If the user next reconnects a new terminal 109 in place of the terminal 103, the adaptor 101 then establishes a new connection 808 with the access point 102. The access point 102 then once again activates the automatic learning mode for the source address. At this moment, the filter still contains the address of the terminal 103. Thus, if the same terminal 103 is subsequently reconnected to the adaptor 101, the system can refunction immediately, without a new learning being necessary.

In the non-limitative example given here, after it is powered up, the terminal 109, newly connected in place of the terminal 103, sends a general broadcast message 809, which is transmitted to the access point 102 by means of the adaptor 101. On reception of the packet 809, the access point 102 reads the source address (that of the terminal 109), which is different from that contained in the filter (which stored the address of the terminal 103). The old address (that of the terminal 103) is therefore replaced by the new address (that of the terminal 109). Thus the filter is updated in real time. A terminal which has left the wireless local network 107 is thus rapidly erased from the filter. After reading of the address of the terminal 109, the learning mode is once again deactivated (operation 504 illustrated in Figure 5B) and the packet 809 is transmitted over the cable network 104. Next the terminal 105 of the cabled network and the terminal 109 can exchange packets, such as the packets 810 and 811, illustrated by way of in no way limitative example in Figure 8.

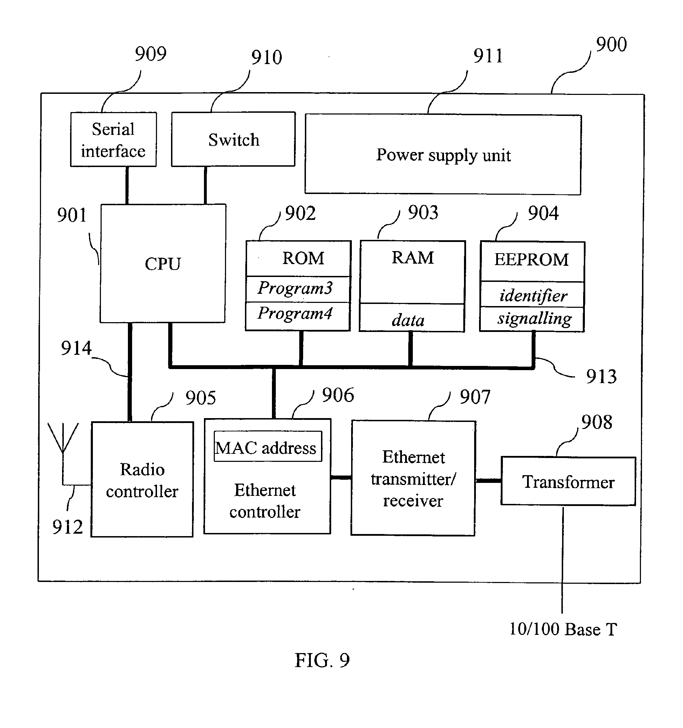

**Figure 9** depicts the electronic circuit 900 of a wireless access point 102 in accordance with the second aspect of the invention, which can be connected to an Ethernet network having a transmission rate of 10 or 100 Mbit/s, and a wireless terminal adaptor 101 in accordance with the second aspect of the invention, provided with an Ethernet interface.

The wireless terminal adaptor 101 can be integrated into equipment of the computer, printer, digital copier etc type or connected to one of these items of equipment having an Ethernet interface. In a preferred embodiment of the invention, the wireless terminal adaptor 101 is an external device, distinct from the terminal 100 or 103, which makes it possible to develop the same architecture and to use the same electronic components as for the wireless access point.

The electronic circuit 900 has, connected together by a control signal, address and data bus 913:
- a microprocessor or main processor 901,
- a network controller 906,
- a read only memory ROM 902,
- a random access memory RAM 903,
- an electrically erasable and programmable memory EEPROM 904.

In the particular embodiment described here, the network controller 906 is an Ethernet controller, since an example is described where the cabled network 104 is of the Ethernet type. However, this example is in no case limitative and, in general terms, the two networks which communicate together by means of the access point can be of any type.

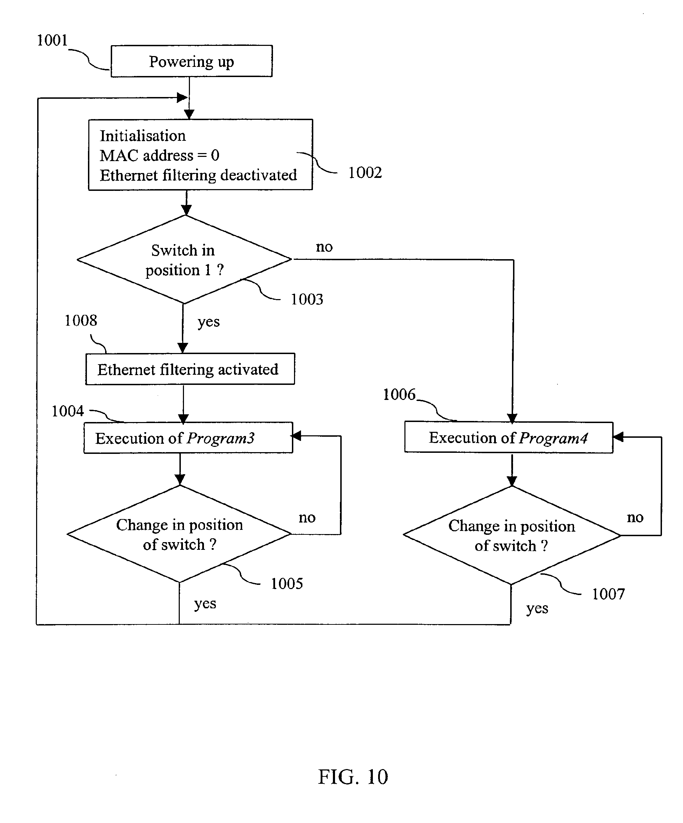

The main processor 901 is adapted to implement the filtering method of the invention and in particular the flow diagrams described in Figures 10, 11 and 12. By means of an interface bus 914, the processor manages a radio controller 905 which transmits and receives radio frames by means of an antenna 912.

The read only memory 902 contains operating programs for the processor 901 ("*Program3*" and "*Program4*")*,* whilst the random access memory 903 temporarily stores the data processed, that is to say the data bits contained in the packets arriving at the circuit 900, either on the radio side, via the antenna 912, or on the Ethernet side, via the 10/100 Base T interface.

The EEPROM memory 904 makes it possible to store configuration parameters, such as identifiers, such as for example the radio address peculiar to the terminal 100 or 103, and signalling or correction parameters, allowing for example to adjust operating parameters of the radio module.

A two-position switch 910 connected to the processor 901 gives the operator the possibility of choosing, either the access point mode, or the terminal adaptor mode. In the first case, the processor will execute the program called "*Program3*"*,* otherwise it will execute the program called "*Program4*"*.* Any change in position of the switch 910 generates an interrupt, which is processed by the processor 901.

A serial interface 909 makes it possible to control the processor 901 by means of an external console and in particular to write in the memory 902 possible new versions of the programs "*Program3*" and/or "*Program4*"*.*

The Ethernet controller 906 has its own MAC address and manages the Ethernet interface by means of a transceiver 907, which can be integrated into the controller 906. A transformer 908 effects the adaptation with an Ethernet interface, which is a 10/100 Base T interface in a preferred embodiment.

In addition, an electrical power supply 911 is provided for supplying all the components of the electronic circuit 900 (the electrical links concerning the power supply are not shown).

All the components illustrated in Figure 9 are well known to a person skilled in the art of communication circuits with processors, and, more generally, information processing circuits. They are therefore not detailed any further here.

In order to be able to exchange data between the access point 102 and the terminal adaptor 101, the program executed by the processor 901 is capable of managing a radio protocol, for example the one described in the DECT standard, specified by the ETSI (EN 300 175, 1991). Consequently the radio controller 905 and its antenna 912 are compatible with the radio standard used.

The flow diagram of **Figure 10** describes the procedure which unfolds when the electronic circuit 900 is powered up, during a step 1001, in accordance with the second aspect of the invention.

During a start-up step 1002, the processor 901 initialises the MAC address of the Ethernet controller 906 to the value 0 and its filtering function, in the deactivated state, which results in a writing operation in the internal registers of the controller. As a general rule, an Ethernet controller can be used in at least one of the following two modes:
- a deactivated filtering mode, where all the packets received are accepted, or
- an activated filtering mode, where the only ones accepted are the received packets having a "Broadcast" and "*Multicast*" address, and the packets intended for the Ethernet controller, a filtering on the destination MAC address being carried out.

On powering up, the Ethernet controller 906 is first used in a mode without filtering.

Then, during a test 1003, the processor 901 determines the position of the switch 910 by testing for example whether the switch is in a position "1", designating arbitrarily the access point operating mode. If such is the case, the circuit 900 will execute *"Program3"* (step 1004) for an access point; if not, it will execute *"Program4"* (step 1006) for a terminal adaptor.

The programs *"Program3"* and *"Program4"* will have to be capable of responding at any time to a change in position of the switch (test 1005 or 1007). In the case of a positive response to test 1005 or 1007, the start-up step 1002 described above is returned to.

Before executing *"Program3"* in the case of the access point, the processor activates the filtering mode for the Ethernet controller (step 1008).

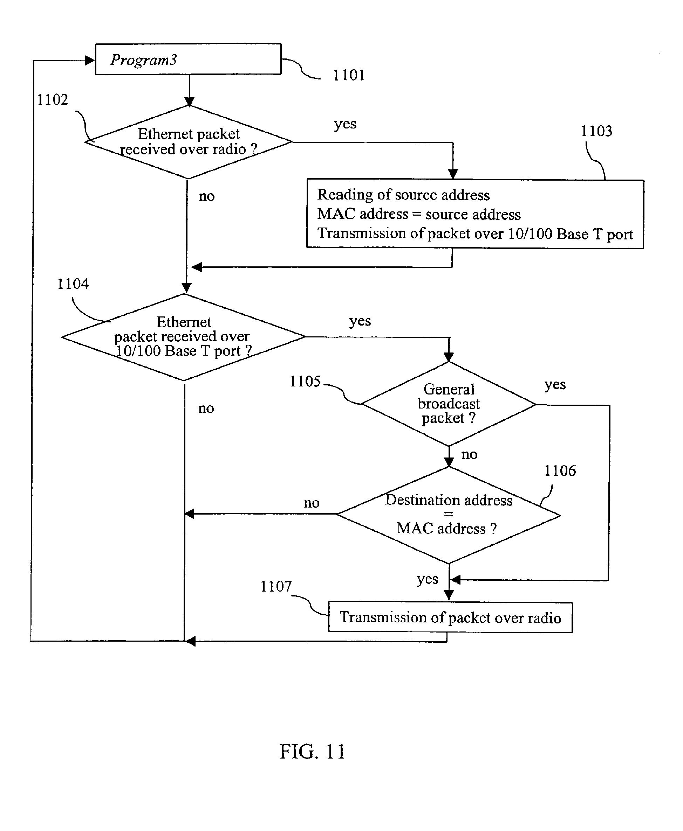

The flow diagram of **Figure 11** describes the functioning of the access point 102 in accordance with the second aspect of the invention, in the case where, during test 1003 illustrated in Figure 10, the processor 901 is controlled by the switch 910 in order to execute *"Program3"* (task 1101).

The operations which are not determinant for the invention (for example the radio connection) are not described here.

In the case of the reception of an Ethernet packet over the radio, detected during a test 1102, the processor 901 recovers the source address of the received packet, which corresponds to the MAC address of the terminal 100 or 103. Next it allocates this address to the Ethernet controller 906, by programming of the controller registers, and transmits the received packet to it. The Ethernet controller then sends this packet over the 10/100 Base T interface. These operations are grouped together in step 1103.

In the case of reception of an Ethernet packet over the 10/100 Base T interface, detected during a test 1104, the Ethernet controller 906 automatically performs a test 1105 on the nature of the packet. If the packet received is a general broadcast packet, it is transmitted to the processor 901, which is responsible for retransmitting it over the radio, during a step 1107. For the other packets, the Ethernet controller 906 makes a comparison of the destination address of the received packet with its own MAC address (test 1106), which corresponds to the MAC address of the terminal 100 or 103. In the case of a negative result, that is to say if the destination address is different from the MAC address of the Ethernet controller, the packet is rejected, given that it is not intended for the terminal 100 or 103; otherwise, it is transmitted over the radio during step 1107.

The program performs a continual loop; however, this may be interrupted by an intervention by the operator, who can actuate the switch 910, as described above with the help of Figure 10.

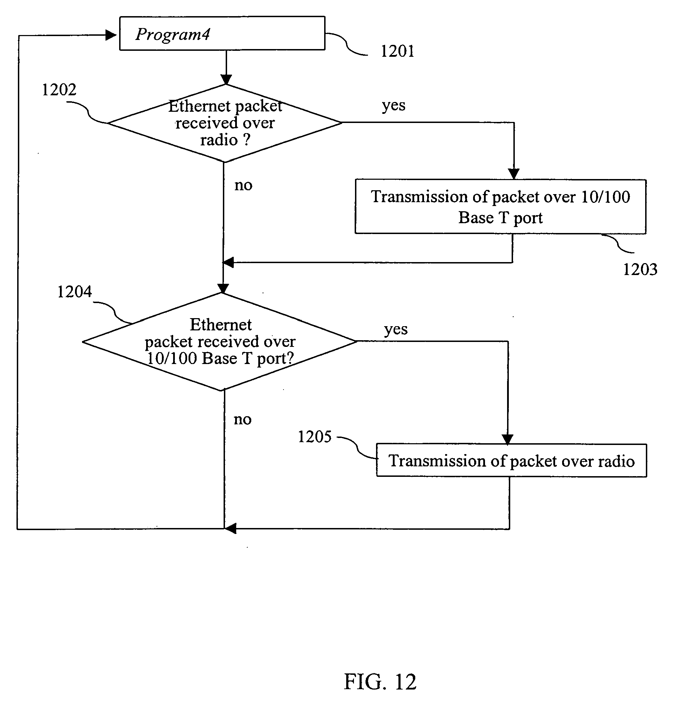

The flow diagram in **Figure 12** describes the functioning of the terminal adaptor 101 in accordance with the second aspect of the invention, in the case where, during test 1003 illustrated in Figure 10, the processor 901 is controlled by the switch 910 in order to execute *"Program4"* (task 1201).

The operations which are not determinant for the invention (for example the radio connection) are not described here.

In the case of the reception of an Ethernet packet over the radio, detected during a test 1202, the processor 901 transmits the packet to the Ethernet controller 906, which is responsible for sending it over the 10/100 Base T interface. These instructions are grouped together in step 1203.

In the case of reception of an Ethernet packet over the 10/100 Base T interface, detected during a test 1204, the Ethernet controller 906 transmits the packet to the processor 901, which is responsible for retransmitting it over the radio (step 1205).

The program effects a continual loop; however, this can be interrupted by an intervention from the operator, who can actuate the switch 910, as described above with the help of Figure 10.

## Claims

1. A method of filtering data packets coming from a first telecommunication network (104) towards a wireless second telecommunication network (107) by an access point (102), wherein:
said second telecommunication network (107) interconnects one or more terminals (100, 103) with said access point,
said terminals (100, 103) have addresses compatible with said first network (104),
said data packets have a source address and a destination address, and
said access point (102) has an address registered in the first telecommunication network (104) and wherein said method comprises the steps of:
reading, at said access point (102), the source address (202) contained in a data packet received from one terminal (100, 103) of said second network (107); and
filtering data packets transmitted from said first network (104) to said second network (107) at said access point (102),
said method being **characterised in that** it further comprises a step of allocating said read source address of said one terminal to the access point by replacing said access point registered address by said read source address, and **in that** during the filtering step, said data packets are forwarded to said one terminal of said second network (107) if the destination address (201) of said data packets is either said registered address of said access point, a multicast address or a broadcast address.

2. A method according to claim 1, wherein said second telecommunication network (107) interconnects said one or more terminals (100, 103) through adapters (101), each adapter being attached to one terminal, said method being **characterised in that** a radio connection (800) is established between said access point (102) and the adapter (101) attached to said one terminal and is triggered according to the activity of the terminal attached to that adapter.

3. An access point (102) in a wireless second telecommunication network (107), said access point (102) having an address registered in the first telecommunication network (104) and comprising:
means for filtering data packets coming from a first telecommunication network (104) towards said second network (107), and
means for reading the source address (202) contained in a data packet received from said one terminal (100, 103) of said second network (107),
wherein:
said second network (107) is adapted to interconnect one or more terminals (100, 103) with said access point (102),
said terminals (100, 103) have addresses compatible with said first network (104) and
said data packets have a source address and a destination address, said access point (102) being **characterised in that**:
it further comprises means adapted to allocate said read source address of said one terminal to said access point by replacing said access point registered address by said read source address, and **in that**
said means for filtering data packets transmitted from said first network (104) to said second network (107) are adapted to forward data packets to said one terminal of said second network (107) if the destination address (201) of said data packets is either said registered address of said access point, a multicast address or a broadcast address.

4. A computer readable medium comprising program code adapted to carry out the method of claim 1 or 2 when run on a computer.

5. A computer readable medium according to claim 4, **characterised in that** it is partially or totally removable.

6. A computer program comprising computer program code means adapted to perform the steps of the method of claim 1 or 2 when run on a computer.

## Patentansprüche

1. Verfahren zur Filterung von Datenpaketen, die von einem ersten Telekommunikationsnetzwerk (104) in Richtung eines drahtlosen zweiten Telekommunikationsnetzwerks (107) kommen, durch einen Zugangspunkt (102), wobei:
das zweite Telekommunikationsnetzwerk (107) ein oder mehrere Endgeräte (100, 103) mit dem Zugangspunkt verbindet,
die Endgeräte (100, 103) Adressen aufweisen, die mit dem ersten Netzwerk (104) kompatibel sind,
die Datenpakete eine Quelladresse und eine Zieladresse aufweisen, und
der Zugangspunkt (102) eine in dem ersten Telekommunikationsnetzwerk (104) registrierte Adresse aufweist;
und wobei das Verfahren die Schritte aufweist:
Lesen der Quelladresse (202), die in einem von einem Endgerät (100, 103) des zweiten Netzwerks (107) empfangenen Datenpaket enthalten ist, an dem Zugangspunkt (102); und
Filtern von Datenpaketen, die von dem ersten Netzwerk (104) an das zweite Netzwerk (107) übertragen werden, an dem Zugangspunkt (102),
**dadurch gekennzeichnet, dass** das Verfahren zusätzlich einen Schritt zum Zuweisen der gelesenen Quelladresse des einen Endgeräts an den Zugangspunkt durch Ersetzen der registrierten Zugangspunktadresse durch die gelesene Quelladresse aufweist, und dass während des Filterungsschritts die Datenpakete an das eine Endgerät des zweiten Netzwerks (107) weitergeleitet werden, wenn die Zieladresse (201) der Datenpakete entweder die registrierte Adresse des Zugangspunkts, eine Gruppenrufadresse oder eine Rundrufadresse ist.

2. Verfahren gemäß Anspruch 1, wobei das zweite Telekommunikationsnetzwerk (107) das eine oder die mehreren Endgeräte (100, 103) über Adapter (101) verbindet, wobei jeder Adapter an einem Endgerät angeschlossen ist, **dadurch gekennzeichnet, dass** eine Funkverbindung (800) zwischen dem Zugangspunkt (102) und dem Adapter (101), der an dem einen Endgerät angeschlossen ist, hergestellt und gemäß der Aktivität des Endgeräts, an dem dieser Adapter angeschlossen ist, getriggert wird.

3. Zugangspunkt (102) in einem drahtlosen zweiten Telekommunikationsnetzwerk (107), wobei der Zugangspunkt (102) eine in dem ersten Telekommunikationsnetzwerk (104) registrierte Adresse aufweist und umfasst:
eine Einrichtung zum Filtern von Datenpaketen, die von einem ersten Telekommunikationsnetzwerk (104) in Richtung des zweiten Netzwerks (107) kommen, und
eine Einrichtung zum Lesen der Quelladresse (202), die in einem von dem einen Endgerät (100, 103) des zweiten Netzwerks (107) empfangenen Datenpaket enthalten ist,
wobei:
das zweite Netzwerk (107) angepasst ist zum Verbinden von einem oder mehreren Endgeräten (100, 103) mit dem Zugangspunkt (102),
die Endgeräte (100, 103) Adressen aufweisen, die mit dem ersten Netzwerk (104) kompatibel sind, und
die Datenpakete eine Quelladresse und eine Zieladresse aufweisen,
**dadurch gekennzeichnet, dass**:
der Zugangspunkt (102) zusätzlich eine Einrichtung aufweist, die angepasst ist zum Zuweisen der gelesenen Quelladresse des einen Endgeräts an den Zugangspunkt durch Ersetzen der registrierten Zugangspunktadresse durch die gelesene Quelladresse, und
die Einrichtung zum Filtern von Datenpaketen, die von dem ersten Netzwerk (104) an das zweite Netzwerk (107) übertragen werden, angepasst ist zum Weiterleiten von Datenpaketen an das eine Endgerät des zweiten Netzwerks (107), wenn die Zieladresse (201) der Datenpakete entweder die registrierte Adresse des Zugangspunkts, eine Gruppenrufadresse oder eine Rundrufadresse ist.

4. Computer-lesbares Medium mit Programmcode, der angepasst ist zum Durchführen des Verfahrens gemäß Anspruch 1 oder 2, wenn er auf einem Computer ausgeführt wird.

5. Computer-lesbares Medium gemäß Anspruch 4, **dadurch gekennzeichnet, dass** es teilweise oder vollständig austauschbar ist.

6. Computerprogramm mit Computerprogrammcodemitteln, die angepasst sind zum Durchführen der Schritte des Verfahrens gemäß Anspruch 1 oder 2, wenn sie auf einem Computer ausgeführt werden.

## Revendications

1. Procédé de filtrage de paquets de données arrivant d'un premier réseau de télécommunications (104) vers un second réseau de télécommunications (107) sans fil, dans lequel :
ledit second réseau (107) de télécommunications interconnecte un ou plusieurs terminaux (100, 103) avec ledit point d'accès,
lesdits terminaux (100, 103) ont des adresses compatibles avec ledit premier réseau (104),
lesdits paquets de données ont une adresse source et une adresse de destination, et
ledit point d'accès (102) a une adresse enregistrée dans le premier réseau de télécommunications (104), et lequel procédé comprenant les étapes dans lesquelles :
on lit, audit point d'accès (102), l'adresse source (202) contenue dans un paquet de données reçu d'un terminal (100, 103) dudit second réseau (107) ; et
on filtre des paquets de données transmis depuis ledit premier réseau (104) audit second réseau (107) audit point d'accès (102),
ledit procédé étant **caractérisé en ce qu'**il comprend en outre une étape d'affectation de ladite adresse source lue dudit terminal au point d'accès en remplaçant ladite adresse enregistrée du point d'accès par ladite adresse source lue, et **en ce que**, pendant l'étape de filtrage, lesdits paquets de données sont envoyés audit terminal dudit second réseau (107) si l'adresse de destination (201) desdits paquets de données est soit ladite adresse enregistrée dudit point d'accès, soit une adresse de diffusion multiple, soit une adresse de diffusion générale.

2. Procédé selon la revendication 1, dans lequel ledit second réseau (107) de télécommunications interconnecte ledit terminal ou lesdits terminaux (100, 103) à travers des adaptateurs (101), chaque adaptateur étant relié à un terminal, ledit procédé étant **caractérisé en ce qu'**une connexion radio (800) est établie entre ledit point d'accès (102) et l'adaptateur (101) relié audit terminal et est déclenchée conformément à l'activité du terminal relié à cet adaptateur.

3. Point d'accès (102) dans un second réseau de télécommunications (107) sans fil, ledit point d'accès (102) ayant une adresse enregistrée dans le premier réseau de télécommunications (104) et comportant:
un moyen pour filtrer des paquets de données arrivant d'un premier réseau de télécommunications (104), vers ledit second réseau (107), et
un moyen pour lire l'adresse source (202) contenue dans un paquet de données reçu dudit terminal (100, 103) dudit second réseau (107), dans lequel :
ledit second réseau (107) est adapté à interconnecter un ou plusieurs terminaux (100, 103) avec ledit point d'accès (102),
lesdits terminaux (100, 103) ont des adresses compatibles avec ledit premier réseau (104), et
lesdits paquets de données ont une adresse source et une adresse de destination, ledit point d'accès (102) étant
**caractérisé en ce que** :
il comporte en outre un moyen adapté à affecter ladite adresse source lue dudit terminal audit point d'accès en remplaçant ladite adresse enregistrée du point d'accès par ladite adresse source lue, et **en ce que**
ledit moyen pour filtrer des paquets de données transmis dudit premier réseau (104) audit second réseau (107) est adapté à envoyer des paquets de données audit terminal dudit second réseau (107) si l'adresse de destination (201) desdits paquets de données est soit ladite adresse enregistrée dudit point d'accès, soit une adresse de diffusion multiple, soit une adresse de diffusion générale.

4. Support lisible par ordinateur comportant un code de programme adapté à l'exécution du procédé de la revendication 1 ou 2 lorsqu'il est exécuté sur un ordinateur.

5. Support lisible par ordinateur selon la revendication 4, **caractérisé en ce qu'**il est partiellement ou totalement amovible.

6. Programme d'ordinateur comportant un moyen à code de programme d'ordinateur adapté à exécuter les étapes du procédé de la revendication 1 ou 2 lorsqu'il est mis en oeuvre sur un ordinateur.
